# EUROPÄISCHE PATENTANMELDUNG

(11) **EP 1 452 299 A1**
(43) Veröffentlichungstag der Anmeldung: **01.09.2004**
(21) Anmeldenummer: 04003629.5
(22) Anmeldetag: 18.02.2004
(51) Int. Cl.: B29C 70/78, B62D 25/06, B32B 5/18, B32B 27/40

(54) **Verfahren zum Herstellen eines Fahrzeug-Karosserieteils**

(30) Priorität: 27.02.2003 DE 10308582
(71) Anmelder: ArvinMeritor GmbH, 63128 Dietzenbach (DE)
(72) Erfinder: Langhoff, Hans Joachim, 38518 Gifhorn (DE); Ludwig, Matthias, 38159 Vechelde (DE); Lutz, Marcus, 38518 Gifhorn (DE); Niesner, Tobias, 38518 Gifhorn (DE); Batke, Harald, 38539 Gerstenbüttel (DE); Niebuhr, Frank, 38518 Wilsche (DE)
(74) Vertreter: Kitzhofer, Thomas, Dipl.-Ing.

(57) **Zusammenfassung**

Ein Verfahren zum Herstellen eines Fahrzeug-Karosserieteils sieht vor, daß auf eine tiefgezogene, folienartige Außenhaut (14) ein dünner Film (16) aus flüssigem Kunststoff aufgetragen wird, der nach dem Aushärten verhindert, daß beim anschließenden Hinterschäumen durch unterschiedlich dicke Abschnitte im Schaum aufgrund unterschiedlichen Schwindens Einfallstellen an der Außenhaut (14) sichtbar sind.

## Beschreibung

Die Erfindung betrifft ein Verfahren zum Herstellen eines Fahrzeug-Karosserieteils, insbesondere eines Fahrzeugdachmoduls.

Karosserieteile werden zunehmend bei Zulieferem hergestellt und beim Fahrzeughersteller an dem Karosserierahmen befestigt. Ein anderer Ausdruck für die vorliegend beanspruchten Teile ist "Karosserieanbauteile", also am Karosserierahmen befestigte Teile, die die Außenhaut des Fahrzeugs abschnittsweise bestimmen. Die Fahrzeugkarosserieteile werden in Sandwich-Bauweise hergestellt, sie sind leicht und dennoch sehr stabil und sie besitzen meist eine dünne tiefgezogene Außenhaut aus Kunststoff oder Aluminium. An die im eingebauten Zustand des Karosserieteils sichtbare Außenseite der Außenhaut werden hohe Anforderungen bezüglich der Oberflächengüte gestellt. Es wird angestrebt, eine sogenannte ClassA-Oberfläche zu erreichen, die extrem glatt ist.

Diese Oberflächengüte ist aber aus folgenden Gründen nur sehr schwer zu erzielen. Die folienartige Außenhaut wird üblicherweise hinterschäumt. Der Schaum bildet dann eine sogenannte Trägerschicht. Diese Schicht wird aber vielfach mit Stegen oder, allgemeiner gesagt, Masseanhäufungen versehen. Der Schaum schwindet beim Aushärten, weshalb in dem Bereich mit höherer Dicke ein größeres Schwinden auftritt als in den Bereichen kleinerer Dicke. Es kommt aus diesem Grund zu sogenannten Einfallstellen oder "Dellen" in der Folie, die ja recht dünn ist und kaum Eigenstabilität besitzt. Diese Einfallstellen können von außen sichtbar sein und die Oberflächenqualität verringern. Ein weiteres Problem kann auftreten, wenn in den Schaum Fasern, üblicherweise Glasfasern, eingeschossen werden. Dies erfolgt beim Auftragen des flüssigen Kunststoffs, bevor der Ausschäumprozess erfolgt. Dieses Verfahren wird auch LFI-Verfahren (Long-Fibre-Injection-Verfahren) genannt. Die Fasern können sich nach dem Aushärten an der Außenoberfläche der Außenhaut abzeichnen, wenn sie unmittelbar an der Rückseite der Außenhaut anliegen und wenn zudem die Schnittkante der Fasern senkrecht an der Außenhaut zu liegen kommt. Diese Abzeichnen besteht darin, daß die Fasern zu sehr kleinen, erhabenen Stellen an der Außenseite der Außenhaut führen.

Die Erfindung schafft ein sehr einfaches Verfahren zum Herstellen eines Fahrzeug-Karosserieteils, mittels dem diese kostengünstig hergestellt werden können und dabei eine hervorragende Außenoberfläche besitzen.

Dies wird durch die folgenden, nacheinander durchzuführenden Schritte erreicht:
a) auf eine tiefgezogene, folienartige Außenhaut wird rückseitig unmittelbar ein dünner Film aus flüssigem, aushärtendem Kunststoff aufgetragen,
b) das Kunststoffmaterial wird ausgehärtet ohne zu schäumen und
c) die vorzugsweise mit dem Kunststoffmaterial besprühte Außenhaut wird rückseitig hinterschäumt.

Das flüssige Kunststoffmaterial, das beispielsweise Polyesterharz oder Polyurethan ist, wird beim Aushärten zu einem harten, dünnen Film, der mehrere Vorteile bringt. Zum einen stabilisiert er die Außenhaut und verhindert, daß Einfallstellen aufgrund der unterschiedlich dicken Schaumstoffschichten auftreten bzw. auf der Außenhaut sichtbar werden, zum anderen verhindert er, daß Fasern beim Hinterschäumen sich außenseitig abzeichnen. Ein weiterer Vorteil besteht darin, daß die folienartige Außenhaut nicht mehr rückseitig beflammt werden muß, wie dies im Stand der Technik notwendig war, um die Außenhaut "reaktiv" für den später aufgetragenen PU-Schaum zu machen und um eine Verbindung zwischen der Außenhaut und der Schaumstoffschicht zu erreichen. Eine solche Beflammung kann vollständig entfallen. Ein weiterer Vorteil besteht darin, daß eine durch Hinterschäumung hergestellte Schaumstoffschicht erzielbar ist, die stark unterschiedliche Dicken aufweist, und zwar in einem Arbeitsgang. Bislang war nämlich angedacht worden, zuerst eine gleichmäßig dicke erste Schaumstoffschicht zu erzeugen, die das Zwischenprodukt aus Außenhaut und Schaumstoffschicht so stabilisiert, daß eine weitere Schaumstoffschicht mit stark unterschiedlich dicken Abschnitten hergestellt werden kann, welche dann nicht mehr zu den Einfallstellen führt. Dieses Verfahren führt jedoch zur Verwendung von zwei unterschiedlichen Schäumwerkzeugen, für die Herstellung der ersten Schaumstoffschicht und für die Herstellung der zweiten Schaumstoffschicht. Durch das erfindungsgemäße Verfahren läßt sich mit einem Werkzeug ein Fahrzeug-Karosserieteil herstellen, das eine Schaumstoffschicht mit stark unterschiedlich dicken Abschnitten besitzt.

Gemäß der bevorzugten Ausführungsform sollte die Härte des ausgehärteten Films größer als die des ausgehärteten Schaumes sein. Der Film sollte darüber hinaus eine Dicke von etwa 0,1 bis 0,8 mm besitzen.

Wie bereits erwähnt kann es vorteilhaft sein, den Schaum im LFI-Verfahren mit Fasern zu verstärken, wodurch ein sehr stabiles Fahrzeug-Karosserieteil hergestellt werden kann.

Die Außenhaut besteht, wie ebenfalls erwähnt, aus einer dünnen, etwa 0,5 bis 1,5 mm dicken Kunststoff- oder Aluminiumfolie, die tiefgezogen ist.

Die Folie kann Rückseitig außerhalb des Schaumwerkzeug besprüht werden oder, je nach Aushärtzeit, auch im Schaumwerkzeug, wo sie anschließend hinterschäumt wird.

Der Film wird aus einem duroplastischen Material, vorzugsweise Polyesterharz oder PU hergestellt, wobei dieses Material nicht zum Schäumen gebracht wird, sondern als dünner und sehr dichter und harter Film die Außenhaut rückseitig verstärkt.

Beim Hinterschäumen kann der flüssige Kunststoff, üblicherweise PU-Material, entweder unmittelbar auf den ausgehärteten Film aufgetragen werden, oder es kann zuerst nach dem Schritt b) eine Glasfasermatte auf die Außenhaut und den Film gelegt werden. Erst anschließend wird dann die Außenhaut hinterschäumt, wobei das PU-Material die Glasfasermatte durchdringt und sich mit dem Film verbindet.

Sehr einfach lassen sich mit dem erfindungsgemäßen Verfahren auch Einlegeteile in das Karosserieteil einschäumen. Solche Einlegeteile sind z.B. Hohlkörper, die das Innere von Stegen bilden, Rohre, oder Befestigungsteile, die teilweise aus dem Schaum herausragen und mittels denen das Karosserieteil am Fahrzeug befestigt ist. Auch ist denkbar, an diese Befestigungsteile Sonnenblenden, Haltegriffe oder sonstige Anbauteile anzubringen. Diese,Einlegeteile werden vor dem Hinterschäumen in das Schäumwerkzeug eingelegt. Anschließend werden sie eingeschäumt, um einen Teil des Karosserieteils zu bilden.

Wie erwähnt wird das erfindungsgemäße Verfahren so durchgeführt, daß nur eine durch Hinterschäumen hergestellte Schaumstoffschicht vorhanden ist.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 ein durch das erfindungsgemäße Verfahren hergestelltes Fahrzeug-Karosserieteil in Form eines Fahrzeugdachmoduls,
- Figur 2 einen abschnittsweisen Schnitt durch das Fahrzeugdachmodul nach Figur 1, aus dem der Aufbau desselben ersichtlich wird,
- Figuren 3 bis 5 aufeinanderfolgende Schritte beim Herstellungsverfahren des erfindungsgemäßen Fahrzeug-Karosserieteils.

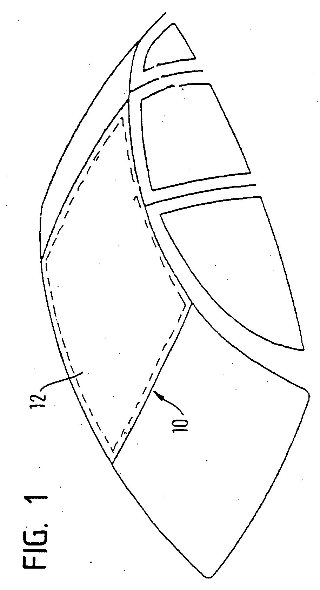

In Figur 1 ist ein Fahrzeug gezeigt, dessen Dach als separat hergestelltes Fahrzeug-Karosserieteil in Form eines Dachmoduls zugeliefert und am Karosserierahmen befestigt wurde. Das Fahrzeugdachmodul 10 hat eine Außenhaut 12 mit einer ClassA-Außenoberfläche.

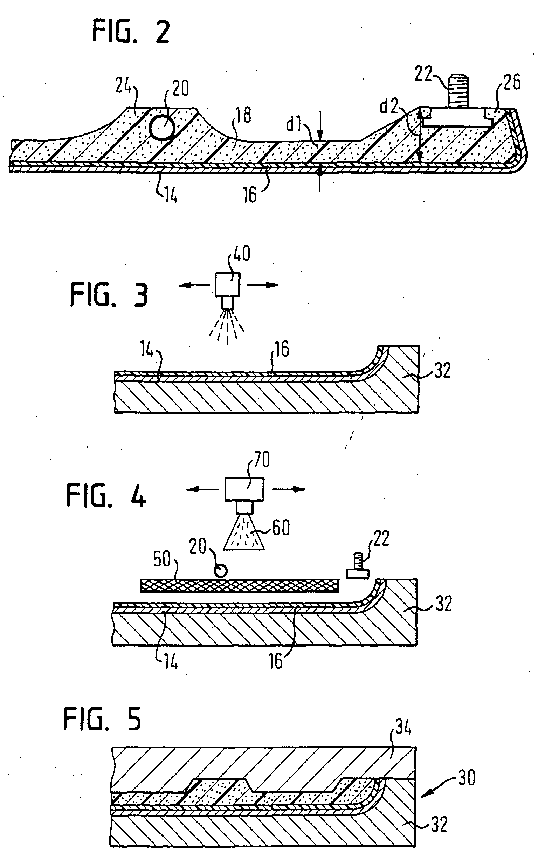

Das Fahrzeugdachmodul hat, wie Figur 2 zeigt, einen sandwichartigen Aufbau. Von außen sichtbar ist im eingebauten Zustand die Außenhaut 14, die durch eine gefärbte Kunststoff- oder Aluminiumfolie gebildet wird, die durch Tiefziehen umgeformt wird. Die Dicke der folienartigen Außenhaut beträgt zwischen 0,5 und knapp 1,5 mm. Rückseitig folgt unmittelbar auf die Außenhaut 14 ein maximal etwa 0,8 mm dicker Film aus relativ hartem, nicht geschäumtem Kunststoff, vorzugsweise Polyesterharz oder Polyurethan, der an der Außenhaut 14 haftet. Der Film trägt das Bezugszeichen 16. Auf den Film folgt rückseitig eine Schaumstoffschicht 18 aus PU-Material. Die Schaumstoffschicht 18 ist die einzige unmittelbar mit Außenhaut 14 und Folie 16 durch Hinterschäumen erzeugte Schicht des Fahrzeugdachmoduls. Die Schaumstoffschicht 18 hat Abschnitte unterschiedlicher Dicke, wobei der dünnste Abschnitt eine Dicke d1 ein, die weniger als halb so dick ist wie der dickste Abschnitt mit seiner Dicke d2.

In die Schaumstoffschicht 18 sind verschiedene Einlegeteile 20, 22 eingeschäumt, nämlich längs eines erhabenen Steges 24 ein schlauchförmiger Hohlkörper 20 und längs eines Randsteges 26 Befestigungselemente mit aus der Schaumstoffschicht 18 vorstehenden Schraubbolzen.

Im folgenden wird das Herstellungsverfahren für das Fahrzeugdachmodul 10 erläutert.

Die Außenhaut 14 wird durch Tiefziehen bleibend verformt, wobei dieser Schritt optional in der unteren Formhälfte 32 eines aus einer unteren Formhälfte 32 und einer oberen Formhälfte 34 bestehenden Schäumwerkzeugs 30 erfolgen kann (siehe Figuren 3 bis 5). Die Außenhaut besteht, wie bereits erwähnt, aus Kunststoff oder Aluminium, wobei die Kunststoffolien vorzugsweise durchgefärbt sind, damit eine Außenlackierung entfallen kann, und die Außenhaut aus Aluminium mit einer sehr dünnen durchgefärbten Kunststoffschicht versehen ist.

Rückseitig wird auf die Außenhaut 14 mittels eines bahnprogrammierten Sprühkopfs 40 flüssiger Kunststoff aufgesprüht, um einen dünnen Film 16 aus diesem Kunststoff zu bilden, der die Rückseite der Außenhaut 14 vollständig bedeckt. Der Film 16 ist aus Polyesterharz oder PU-Material und besitzt nach der Aushärtung, die ohne Schäumen erfolgt, eine Härte, die die Härte und die Dichte der später aufgebrachten Schaumstoffschicht 18 bei weitem übersteigt.

Dieses Auftragen des dünnen, später harten Films aus Kunststoff kann im Schäumwerkzeug erfolgen, wie Figur 3 zeigt, es kann jedoch auch außerhalb desselben durchgeführt werden. Wichtig ist, daß ein Beflammen der Rückseite der Außenhaut 14 entfällt, diese wird ohne Vorbehandlung besprüht, wie Figur 3 zeigt.

Anschließend kann optional unmittelbar auf den Film 16 eine Glasfasermatte 50 aufgelegt werden. Ferner können optional, wenn vorhanden, die Einlegeteile 20, 22 im Werkzeug positioniert werden. Diese Schritte des Einlegens der Glasfasermatte 50 und der Einlegeteile 20, 22 ist, wie gesagt, optional.

In jedem Fall wird jedoch bei in das Unterteil 32 des Werkzeugs 30 eingelegter und mit dem Film 16 versehener Außenhaut 14 anschließend flüssiges PU-Material 60 mittels eines weggesteuerten Düsenkopfs 70 aufgetragen. Beim Auftragen werden zusätzlich Glasfasern in das flüssige PU-Material 60 eingeschossen, die sich gleichmäßig mit dem PU-Material vermischen (LFI-Verfahren). Dies ist in Figur 4 dargestellt.

Nach dem vollflächigen Auftragen des flüssigen PU-Materials 60 wird das Werkzeug durch Aufbringen der oberen Formhälfte 34 geschlossen, das Werkzeug ist geheizt, so daß das PU-Material 60 ausschäumt und die Schaumstoffschicht 18 entsteht (Figur 5).

Nur zur Vereinfachung der Darstellung sind in Figur 5 die Einlegeteile 20, 22 weggelassen.

## Patentansprüche

1. Verfahren zum Herstellen eines Fahrzeug-Karosserieteils, insbesondere eines Fahrzeugdachmoduls, **gekennzeichnet durch** die folgenden nacheinander durchzuführenden Schritte:
a) auf eine tiefgezogene, folienartige Außenhaut (14) wird rückseitig unmittelbar ein dünner Film (16) aus flüssigem Kunststoff aufgetragen,
b) das Kunststoffmaterial wird ausgehärtet,
c) die mit dem Film (16) versehene Außenhaut (14) wird rückseitig hinterschäumt.

2. Verfahren nach Anspruch 1, **dadurch gekennzeichnet, daß** der Film (16) durch Sprühen aufgetragen wird.

3. Verfahren nach Anspruch 1 oder 2, **dadurch gekennzeichnet, daß** die Härte des ausgehärteten Films (16) größer als die der ausgehärteten Schaumstoffschicht (18) ist.

4. Verfahren nach einem der vorhergehenden Ansprüche, **dadurch gekennzeichnet, daß** die Schaumstoffschicht (18) bei ihrer Herstellung im LFI-Verfahren mit Fasern verstärkt wird.

5. Verfahren nach einem der vorhergehenden Ansprüche, **dadurch gekennzeichnet, daß** die Außenhaut (14) eine Kunststoff- oder Aluminiumfolie ist.

6. Verfahren nach einem der vorhergehenden Ansprüche, **dadurch gekennzeichnet, daß** die Außenhaut (14) in einem offenen Schaumwerkzeug (30) besprüht und anschließend in diesem hinterschäumt wird.

7. Verfahren nach einem der vorhergehenden Ansprüche, **dadurch gekennzeichnet, daß** der Film aus einem duroplastischen Material, insbesondere Polyesterharz oder Polyurethan ist.

8. Verfahren nach einem der vorhergehenden Ansprüche, **dadurch gekennzeichnet, daß** beim Hinterschäumen flüssiger Kunststoff unmittelbar auf den ausgehärteten Film (16) aufgetragen wird.

9. Verfahren nach einem der Ansprüche 1 bis 8, **dadurch gekennzeichnet, daß** nach Schritt b) eine Glasfasermatte (50) rückseitig auf die Außenhaut (60) gelegt und anschließend hinterschäumt wird.

10. Verfahren nach einem der vorhergehenden Ansprüche, **dadurch gekennzeichnet, daß** die durch Hinterschäumen hergestellte Schaumstoffschicht (18) unterschiedliche Dicken (d1, d2) aufweist.

11. Verfahren nach Anspruch 10, **dadurch gekennzeichnet, daß** in der Schaumstoffschicht (18) Dickenunterschiede von wenigstens dem Faktor 2 auftreten.

12. Verfahren nach einem der vorhergehenden Ansprüche, **dadurch gekennzeichnet, daß** vor dem Hinterschäumen vorgefertigte Einlegeteile (20, 22) in das Schäumwerkzeug (30) eingelegt und anschließend umschäumt werden, um Teil des Fahrzeug-Karosserieteils zu bilden.

13. Verfahren nach einem der vorhergehenden Ansprüche, **dadurch gekennzeichnet, daß** nur eine durch Hinterschäumen hergestellte Schaumstoffschicht (18) vorhanden ist.
